# EUROPEAN PATENT SPECIFICATION

(11) **EP 1 799 141 B1**
(45) Date of publication and mention of the grant of the patent: **09.09.2015**
(21) Application number: 04784624.1
(22) Date of filing: 20.09.2004
(51) Int. Cl.: A61C 5/00

(54) **SYSTEM FOR UTILIZING ULTRASONIC ENERGY TO ACTIVATE TOOTH WHITENING SUBSTANCES**
SYSTEM ZUR NUTZUNG VON ULTRASCHALLENERGIE ZUR AKTIVIERUNG VON ZAHNAUFHELLUNGSSUBSTANZEN
SYSTEME POUR UTILISER L'ENERGIE ULTRASONIQUE A DES FINS D'ACTIVATION DE SUBSTANCES DE BLANCHIMENT DENTAIRE

(43) Date of publication of application: 27.06.2007
(73) Proprietor: CAO Group, Inc., West Jordan, UT 84084 (US)
(72) Inventor: OSTLER, Calvin, D., Riverton, UT 84065 (US); CAO, Densen, Sandy, UT 84093 (US); JOLLEY, Lincoln, Herriman, UT 84065 (US)
(74) Representative: Leppard, Andrew John
(86) International application number: PCT/US2004/030821
(87) International publication number: WO 2006/041432

(56) References cited:
- EP-A1- 0 286 766
- WO-A1-2005/107638
- FR-A1- 2 844 719
- US-A1- 2002 179 124
- US-A1- 2003 104 341

## Description

### BACKGROUND

The disclosure herein relates to use of ultrasonic or sonic energy to cause release of oxygen ions which may then be used for a desired purpose, such as for bleaching teeth.

EP o 286 766 discloses a method and device for producing the whitening of live teeth with pathological and normal colorations. The whitening of the teeth is effected by applying different chemical products to the dental enamel, covering the teeth to be treated with a metallic plate containing an absorbent material with a chemical whitening product which acts in the presence of heat and provokes the reaction of the product producing the whitening of teeth. Heating can be performed using ultrasound.

FR 2 844 719 discloses an electro-chemical technique for whitening teeth.

WO 2005/107638 discloses an autonomous device comprising a trough shaped for the immersion of teeth and/or gums of a dental arch or a dental brace and one or more electrical components which provide functionality. Physical stimulation is achieved using an ultrasonic transducer or ultrasonic motors

### SUMMARY

According to the invention, there is provided an apparatus as claimed in Claim 1.

### BRIEF DESCRIPTION OF THE DRAWINGS

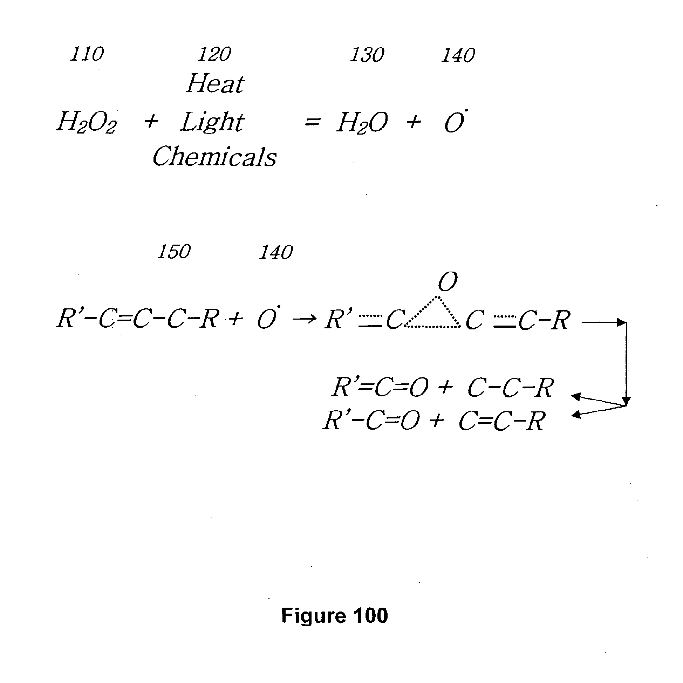

Figure 100 depicts an example bleaching or whitening reaction.
Figure 200 depicts an experiment in using ultrasonic energy to accelerate whitening of cow's teeth.
Figure 300 depicts a control for the experiment of Figure 300.
Figure 400 an example oxidation reaction to remove stains from teeth.
Figure 500 depicts the chemical liberation of free radical oxygen from hydrogen peroxide in basic medium.
Figure 600 depicts using ultrasonic energy to accelerate release of oxygen ions.
Figures 700 and 800 depict example ultrasonic or sonic tooth bleaching devices.
Figures 900a, 900b, 1000a and 1000b depict example ultrasonic dental whitening trays.

### DETAILED DESCRIPTION

The description herein should be read in conjunction with the appended drawings, and the reference numerals used refer to the drawings. The entirety of the disclosure herein, including the specifics thereof, are intended to be exemplary and not limiting.

Referring to Figure 1, free radical oxygen atoms 140 can be liberated from peroxides such as hydrogen peroxide 110, carbamide peroxide, perborates, boron peroxide, and salts of peroxides formed from alkali and alkaline earth metals, by use of a catalyst such as heat, light or chemicals 120, with a water byproduct 130. Those oxygen ions 140 readily attack and oxidize organic molecules 150 that comprise the stains in discolored teeth as shown in the chemical reaction. Release of free radical oxygen atoms from peroxides can be accelerated by the addition of heat, light and/or chemicals; specifically chemicals that raise the pH of the peroxide environment. A lengthy dissertation of the exact mechanisms is discussed in prior work found in US Patent Number: 6,1 16,900, "Binary energizer and peroxide delivery system for dental bleaching".

Three additional forms of energy that can be used in accelerating the release of oxygen ions from a peroxide include ultraviolet ray emitter, ultrasound emitter, and laser ray emitter. However, we have found that the addition of visible light, regardless of the wavelength, or regardless of the source whether it is a coherent source such as a laser or non-coherent source such as an "ultraviolet ray emitter" fails to energize peroxide directly. Hydrogen peroxide and derivatives thereof have vibrational and rotational energy levels in the near and far infrared portion of the electromagnetic spectrum. Peroxides therefore are not capable of absorbing and directly utilizing long wavelengths such as those found in sound or ultrasound or the shorter wavelengths which comprise visible light. When visible light sources are used to "catalyze" or "accelerate" elements of the whitening products absorb the light and then radiate infrared (heat) to the peroxide, therefore, they provide infrared energy only indirectly.

The inventors herein attempted to energize peroxides and attempted to use ultrasound to facilitate penetration of the peroxide into tooth enamel in our laboratory, with dismal results. We have demonstrated, experimentally, that ultrasound cannot activate or accelerate hydrogen peroxide directly. We also found that it is virtually impossible to convert ultrasound waves to heat in dental whitening products that are usable. Furthermore, we were unable to facilitate penetration of the peroxide into the enamel with any degree of success. Our previous experience and the prior art proved useless in obtaining any benefit from ultrasonic energy in the current and previous tooth whitening methods and systems.

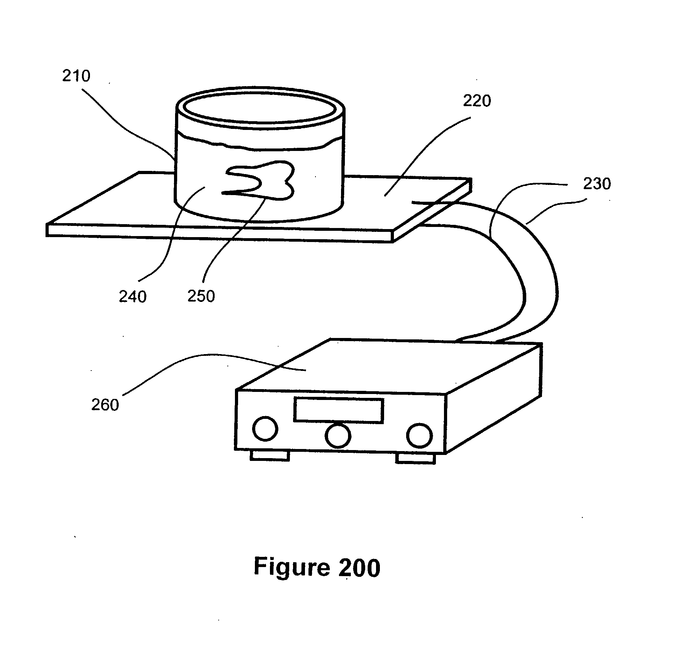

We began our experimentation (refer to Figure 200) by purchasing a number of household, stainless steel, measuring cups 210. These cups are sold at "supermarket" type chain stores, carry the brand name EKCO. The capacity of the cups (210) were "1/8 cup". We trimmed the handles off of the cups and Edo 65/2.95", 18 Kilohertz (KHz) transducers (220) were attached to a number of the cups. Some cups also had Edo 70/1.70" transducers attached and others has Edo 35 KHz transducers (220) attached. Also, some Edo 64/2.0"OD 45 KHz transducers were attached to cups. Wires 230 were attached to the transducers. The frequencies, the frequency in which the transducer is most efficient. The transducers convert electrical energy from the wires to ultrasonic energy. The actual resonance frequencies of the transducer varies as load changes. That is to say the actual resonance frequency changes if, for instance, a gel is placed in the cup instead of water.

To drive and monitor the ultrasonic transducers, we used a Metex brand Function Generator, Model 9802A, a Tektronix Digital Oscilloscope, Model TDS-220, and a Krohn-Hite Amplifier, Model 7500 (260). With this equipment we were able to tune the signal to reach resonant frequency and to drive the transducer from 1 volt to hundreds of volts. The Metex Function Generator was set to deliver a square wave for all experiments.

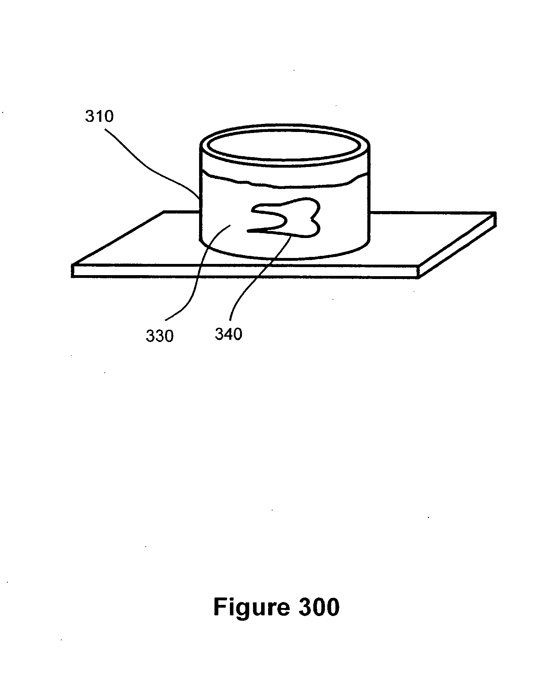

In our first experiment, refer to Figure 300, we placed 50% hydrogen peroxide solution (330) into the cup (310). We then placed artificially stained cows teeth (340) into the hydrogen peroxide (330). We then generated the ultrasonic waves for 15 minutes. The solution was then replaced with fresh solution (330) and the procedure was repeated. The experiment with fresh teeth (340) was repeated at the three different frequencies. The voltage was set at the maximum level possible that also allowed us to keep the peroxide from jumping out of the cup (310). A control tooth was placed in a 50% hydrogen peroxide solution that was not exposed to ultrasound. Upon comparing the ultrasound exposed teeth to the control tooth no real difference existed; the addition of strong ultrasonic waves at three different frequencies did nothing to enhance the whitening. The ultrasonic waves did not energize the peroxide, facilitate penetration of the peroxide into the tooth, nor did it accelerate the whitening process.

Our initial experiments also utilized a whitening product that is currently in use in dentist's offices around the world. The whitening product comprised of multiple parts. The first part is thickening agent, in this case fumed silica. The second part is a chemical agent used to increase the pH, in this case sodium hydroxide. The final part is the peroxide, in this case 35% hydrogen peroxide. All of these chemicals can be obtained from virtually any chemical supply house. We purchased the chemicals from Hi-Valley Chemical Company of Centerville, Utah. The concentration of hydroxyl group per concentration of peroxide and resultant pH became very important to our failure and our success. In this currently available whitening gel the mixed concentration was about .0085 mole of hydroxide per mole of hydrogen peroxide; yielding a pH between 7 and 8. The procedure discussed at length in the previous paragraph was repeated with this gel. However, the procedure was repeated three times instead of twice. Non-the-less the results were the same; there was very little difference between the ultrasound treated teeth and the control tooth. The addition of ultrasound to currently available systems did not energize the system, facilitate penetration of the peroxide into the teeth, nor accelerate the whitening process.

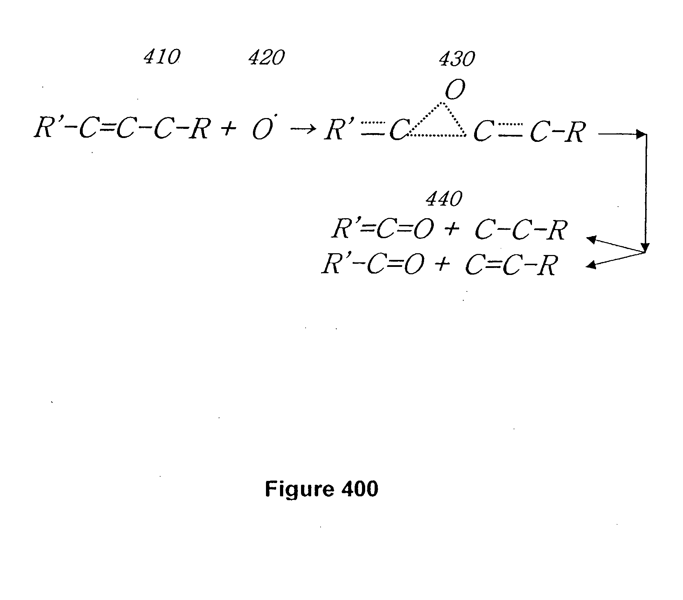

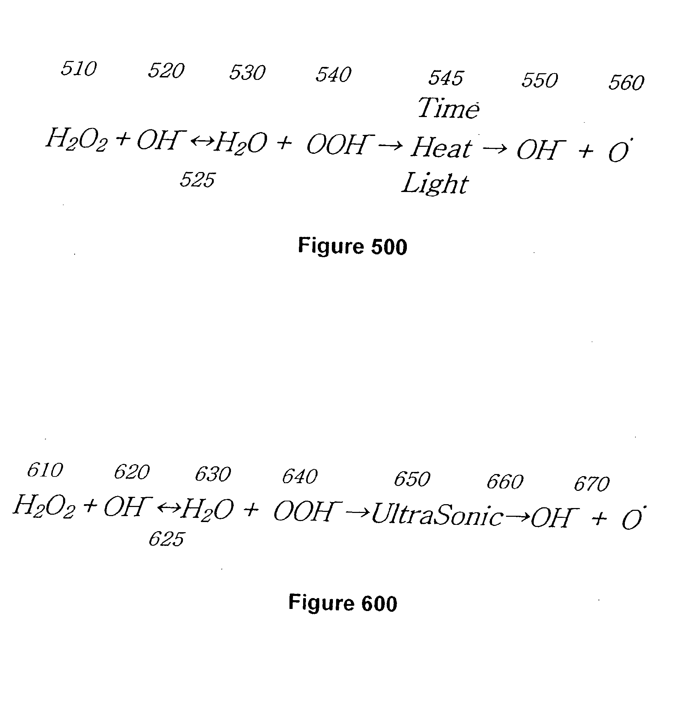

In our next experiments we increased the concentration of hydroxide and we pushed the pH from the currently acceptable and available whitening products of 7-8 to a pH of 8-9. We then repeated the experiment outlined above. This time the difference between the ultrasound exposed teeth and the control teeth were both large and profound. When peroxides oxidize stains the reactions proceed according to Figure 400. The offending molecule (410) is attacked by a free radical oxygen atom (420) forming an intermediary (430) and eventually dividing the offending molecule into a variety of possible fragments (440) which are carried away by the solvent which forms the gel, paste or rinse. While the addition of ultrasonic energy may and probably does assist or accelerate the reaction depicted in Figure 400, the free radical oxygen atom (420) is highly reactive and requires little or no assistance in rapidly oxidizing organic molecules that make up 'stains'. However, generating the free radical oxygen is, in a relative sense, difficult. The chemical liberation of free radical oxygen from hydrogen peroxide in basic medium is illustrated in Figure 500. Hydrogen peroxide (510) in basic medium (520) is in equilibrium with (525) water (630) and an oxyhydronium anion (640). In this state the oxyhydronium anion (640) is relatively stable but given enough time (645) will generate a oxygen free radical atom (560) which also generates a hydroxide ion (550) which is used again in the process replacing the consumed hydroxide ion (520) provided by the basic medium. The addition of heat or light (645) as been proven to increase the liberation of oxygen free radical atoms (560) as previously discussed.

The results of our experiments now provide the evidence that certain wavelengths of ultrasound can and do accelerate or enhance the liberation of free radical oxygen from peroxides. Refer to Figure 600. Hydrogen peroxide (610) in a basic medium (620) reacts (625) to form water (630) and the oxyhydronium anion (640). This reaction, as before, is actually an equilibrium state (625) in which the products (630, 640) slip back to reactants (610, 620). However, as the concentration of the hydroxide ion (620) increase, hydroxide ion (620) being the limiting reactant and the peroxide (610) being in excess, the equilibrium (625) shifts in favor of the products (630, 640). In system where time, heat, and/or light are added to generate the free radical oxygen atom, little difference in oxygen free radical atom generation is noted as the pH is increased over quite a large margin; a pH of 7-8 is as good as a pH of 11-12. However, refer to Figure 600, when ultrasonic energy is added (650) to the oxyhydronium ion (640) produced by higher levels of hydroxide (620) the liberation of oxygen free radical atoms (670) increases dramatically, in some case by a factor of four or more, but generally can be double or triple. The addition of ultrasound to the equilibrium (625) pushes that equilibrium further in favor of the products (630, 640) as opposed to the reactants (610, 620). The additional generation of free radical oxygen atoms using ultrasonic energy dramatically improved and hastened the whitening or oxidizing performance of the whitening agent, producing the a 2-3 shade whiter tooth than control teeth that were exposed to the whitening agent but not to ultrasonic energy. Of the three different ultrasonic frequencies tested; 18, 35, and 45 KHz, the 35 KHz frequency produced the best results in removing artificial stains from cows teeth. 35 KHz performed much better than 18 KHz, producing at least one shade lighter teeth than the 18 KHz. 35 KHz performed on marginally better than 45 KHz.

Upon review of our data and methods we came to the conclusion that too many variables exist in judging the performance of tooth whitening products on stained teeth. Even if all of the teeth are stained in the same solution for the same amount of time individual differences in the teeth make them more or less susceptible to staining. Also the comparison of the teeth to a shade guide calls for a subjective conclusion rather than an objective measurement. What we needed was an objective way of measuring the stain removing power or potency of a whitening product. Many individuals and organizations have looked for such a method. Clinical Research Associates, the most respected and widely subscribed to, independent dental research laboratory has invented a method in which a sealed calorimeter is used to measure the heat change and thereby the potency of whitening products. The process works very well and is objective. However, it will only work with moderately active agents because it is sealed. As free radical oxygen atoms are produced a number of them collide with each other producing diatomic oxygen which is a gas at livable temperatures. The greater the volume of free radical oxygen atoms produced the greater the volume of oxygen gas produced. In a very active system, such as the ultrasonic system involved here, large volumes of gas are produced and a sealed calorimeter would not only be infeasible it would be dangerous.

We concluded that the introduction of a colored staining molecule in known concentration to a whitening agent would provide an objective method for measuring the potency of active whitening agents or systems. For instance the addition of known amounts of tobacco extract, concentrated tea, concentrated coffee, and/or beta-carotene. We soon came to the realization with all but beta-carotene that exact concentrations would be nearly impossible to obtain. Unfortunately, beta-carotene is only slightly soluble in water and was, therefore, a poor candidate. We turned our attention elsewhere and found two dyes that are water soluble and readily obtainable from chemical source such as those already mentioned. The two dyes we selected were FD&C #1 Blue and Amaranth (red). FD&C #1 Blue is cleared by active systems quickly. Amaranth on the other hand is cleared much slower. The clearing rate is controlled by the concentration. In terms of gauging potency of activated whitening products is important to not that both dyes when placed in off the shelf 20% hydrogen peroxide solutions survive for months even when the amounts of dye are very small, on the order of 0.001%. Working with varying concentrations of the dyes and the ultrasound activated systems we determined the best concentration of the dyes were 1.5% FD&C Blue and 4% Amaranth. We prepared a Stock Dye Solution at these concentrations for our studies.

We continued studies in the fixtures described above and illustrated in Figure 200. We proceeded with the studies as described above and illustrated in Figure 300. However, we did not place a tooth in the solution. The solution was comprised of 50 grams of 10% hydrogen peroxide at a pH of 8.0-8.2 and one drop of Standard Dye Solution. 15 grams of the solution was transferred to the fixture and the ultrasonic energy was applied. The remainder of the solution was set aside as a control so that the difference between the two could be observed. The experiment was conducted at the three frequencies described above; 15, 35, and 45 KHz. The results of the study are listed in the table below:

| **Frequency** | **Clear Time Blue** | **Clear Time Red** | **Control Clear All** |
|---|---|---|---|
| 18 KHz | 5 Minutes | 30 Minutes | 113 Minutes |
| 35 KHz | 5 Minutes | 25 Minutes | 106 minute |
| 45 KHz | 5 Minutes | 25 Minutes | 117 Minutes |

The results of this study partially confirmed the results of the study conducted with the artificially stained cows teeth; 35 KHz was superior to 18 KHz. However, the results of this objective study showed that 35 KHz and 45 KHz were identical which was moderately at odds with the artificially stained cows teeth study which showed that 35 KHz was marginally better than 45 KHz. Based on the combined data we elected to pursue finalization of the project using transducers that generated energy in the proximity of 35 KHz.

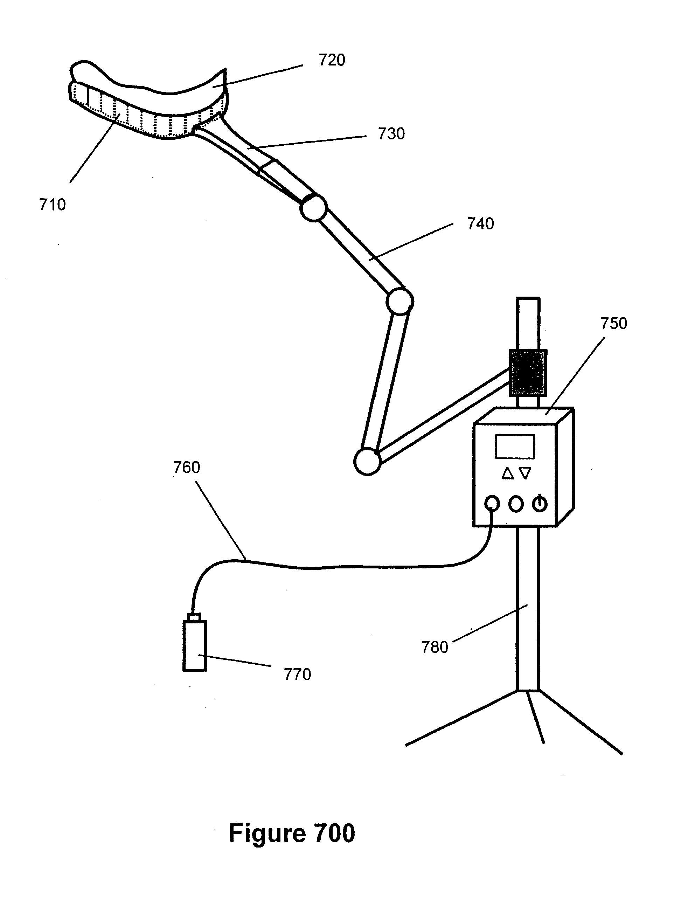

The next step in the process was to configure a transducer such that ultrasonic energy could be applied to whitening systems in the mouth of a patient. Several viable concepts were developed. One concept, Refer to Figure 700, was that the dentist would apply the whitening agent (720) to the patient's teeth (710) an ultrasonic transducer system (730) which is supported by a mechanism such as an articulating arm (740) would then be position in contact with the whitening agent (720). System power supply and controls (750) attach to the mechanism at the opposite end of the articulation arm (740) and a patient interface/interrupt (770) is supplied and connected to the control module with a cable or wires (760). The entire mechanism may then be supported by a stand (780) that may or may not have wheels to improve portability. The concept is functional and viable.

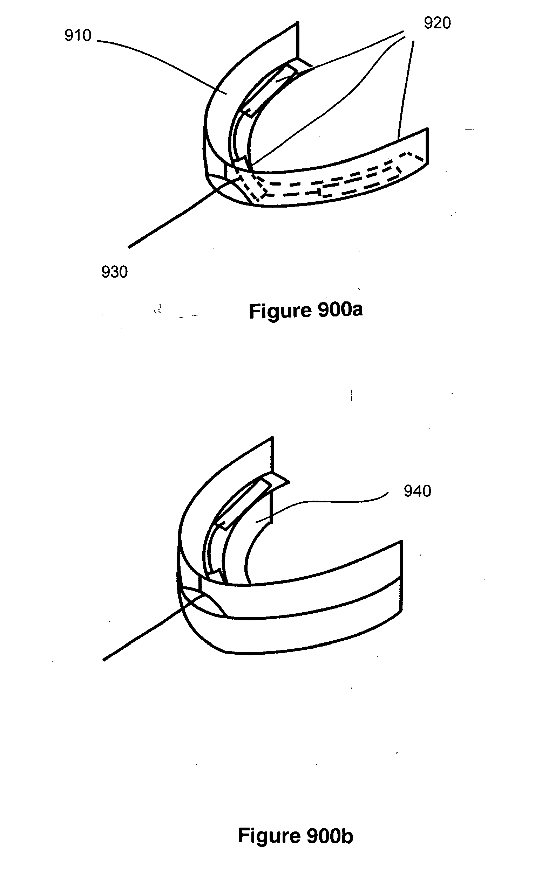

Another concept, Refer to Figures 900a and 900b, provided that the transducer (920) is positioned in the bottom of a flexible tray (910). The whitening agent would be placed in the tray (910) in contact with the transducer (920) and then the assembly would be placed on the patient's teeth. The transducer (920) would be powered by way of electrical wires (930) that would, subsequently interface with the control circuitry such as the control circuitry described in Figure 700. Of course such a system could be configured to provide whitening to both the upper and lower dental arches of the patient simultaneously. To facilitate whitening both arches simultaneously one need only add a second or extend the existing flexible tray (940). This concept proved to be functional and viable. These tray(s) are positioned such that they are vertical mirror images of each other allowing the dentist to place whitening agent in the top tray (910) and the bottom tray (940) and position both trays as a single unit in the patient's mouth such that both the upper arch of teeth and the lower arch of teeth are treated simultaneously with the same transducer(s) (920). The transducer(s) are powered by way of electrical wires (940) that would, subsequently interface with the control circuitry such as the control circuitry described in Figure 700. These concepts proved to be functional and viable. Other concepts revolving around the same principles discussed above and illustrated in Figures 900a and 900b would position the transducer(s) on the side walls of the tray (910, 940).

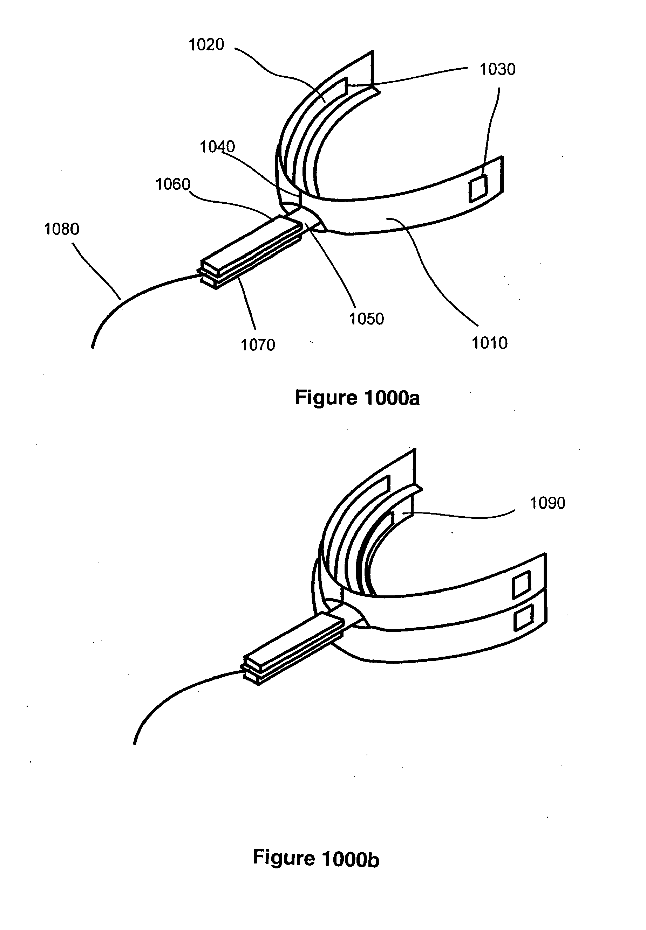

An extension of these concepts moves the transducer outside of the tray itself but maintains acoustical communication with the whitening agent inside the tray. Refer to Figures 1000a and 1000b, in this concept the transducer(s) (1060, 1070) is mounted to the tang (1050) of a fork. At a point (1040) the tang converts into two arms of the fork (1020, 1030). The fork is manufactured of a material that transmits ultrasonic or sonic energy very efficiently and also is resistant to oxidation from the peroxides and other chemicals associated with the whitening agent such as stainless steel. A flexible tray (1010) is constructed such that is may be attached to the fork (1030) for the course of treatment and then may be removed and discarded. When the tray (1010) is in place on the fork (1020, 1030) the dentist will apply the whitening agent inside the tray (1010) such that it is in contact with the arms of the fork (1020, 1030). The assembly is then placed in the patient's mouth and the treatment is carried out as prescribed. The transducer(s) (1060, 1070) are powered by way of electrical wires (1080) that would, subsequently interface with the control circuitry such as the control circuitry described in Figure 700.. The use of a fork affords the ability to configure placement of the ultrasonic or sonic energy transmission in several locations. For instance the fork could be designed to be positioned on the vertical walls of the tray, or on the floor of the tray, or position between two trays as illustrated in Figures 900a and 900b, or two sets of fork arms could come of off the transition point (1040) to facilitate a second tray or extension of the existing flexible tray (1010) as illustrated in Figure 1000b (1090) but that would have the arms positioned against the vertical walls of both trays, i.e. four arms distributed in the two trays. The concept was viable and functional.

In another example ultrasonic or sonic dental whitening or dental cleaning tray, the tray includes an insertion portion and a protrusion portion. The insertion portion is intended to be inserted into a patient's mouth and the protrusion portion is intended to protrude from the patient's mouth. The insertion portion has a tray section and a projection section. The tray section may include a reservoir or other geometry or feature for retaining a quantity of dental bleach adjacent to a patient's teeth. The projection section would project from a patient's mouth when the tray section is inserted into the patient's mouth. The projection section may include an attachment for attachment of a protrusion portion thereto by use of a clamp, clasp or other mechanism. The protrusion portion has an elongate body on which one or more ultrasonic transducers such as Edo EC-70 (1.7" x 0.4" x 0.032"; fl_ = +/- 31 kHz). An electrical attachment maybe provided for powering the transducer. When the transducer is powered, ultrasonic waves are transmitted to the dental bleach in the tray through the structures mentioned above. If desired, the structures can be designed for greater than 50% ultrasonic energy transmission, greater than 60%, greater than 70%, greater than 80% or greater than 90%.

Ultrasonic energy with a wavelength of greater than 10 kHz, greater than 15kHz, greater than 20 kHz, greater than 30 kHz, greater than 40 kHz, greater than 50 kHz, greater than 70 kHz, or more can be used. The ultrasonic transducers can be powered with greater than 10 VDC, greater than 20 VDC, greater than 30 VDC, greater than 40 VDC, greater than 50 VDC, greater than 60 VDC, greater than 70 VDC, greater than 80 VDC, greater than 90 VDC, greater than 100 VDC, or otherwise can be used. During bleaching, the bleaching substance can be exposed to ultrasonic energy for more than 10 seconds, more than 20 seconds, more than 30 seconds, more than 45 seconds, more than 1 minute, more than 2 minutes, more than 3 minutes, more than 5 minutes, more than 10 minutes, more than 15 minutes, more than 30 minutes or otherwise. Alternatively, the bleaching substance can be exposed to ultrasonic energy for less than 10 seconds, less than 20 seconds, less than 30 seconds, less than 45 seconds, less than 1 minute, less than 2 minutes, less than 3 minutes, more than 5 minutes, less than 10 minutes, less than 15 minutes, less than 30 minutes or otherwise

We prepared three whitening agents, the first (gel) is comprised of a mixture of 3.0 grams of fumed silica, 10% hydrogen peroxide, and .100 grams potassium hydroxide and one drop of the standard dye solution described above. We placed a portion of the whitening agent in the device illustrated in Figures 1000a and 1000b, the remaining portion was set aside and observed as a control. The device was constructed utilizing EDO's EC-70X1.70" ultrasonic transducer which produces ultrasonic energy in the 35 KHz range. The effect of three different ultrasonic energy levels were tested on the whitening agent (gel). We varied the ultrasonic energy by varying the voltage applied to the transducer. The second whitening agent was comprised of 100 grams of 10% hydrogen peroxide with the pH adjusted to 8.0-8.2 and two drops of the standard dye solution. With this whitening agent the tray was separated from the fork and the arms of the fork were submerged in the whitening agent. A portion of the whitening agent was set aside and observed as a control. The effect of the thickness of the material was evaluated with the second whitening agent; forks constructed of 0.10, 0.015, and 0.020 inch stainless steel were constructed for the evaluation. All other parameters, width and length of arms and width and length of tang were identical the only variable was the thickness. The third whitening agent (catalyst) consisted of 50 grams of 10% hydrogen peroxide, .060 grams of potassium hydroxide, and .027 grams of potassium iodide. Potassium iodide is a bleaching catalyst: A portion of the third agent was set aside and observed as a control. The third agent was intended to evaluate the effect of ultrasonic energy on chemically catalyzed whitening agents. The results are listed in the table below:

| **Thickness** | **Voltage** | **Time to Clear** | **Control Clear** |
|---|---|---|---|
| .010 | 100 VDC | 90 minutes (aqueous) | 96 minutes |
| .015 | 100 VDC | 45 minutes (aqueous) | 91 minutes |
| .020 | 100 VDC | 47 minutes (aqueous) | 97 minutes |
| .015 | 50 VDC | 90 minutes (gel) | 123 minutes |
| .015 | 100 VDC | 70 minutes (gel) | 126 minutes |
| .015 | 150 VDC | 30 minutes gel) | 121 minutes |
| .015 | 100 VDC | 13 minutes (catalyst) | 23 minutes |

These results provide a clearer picture. The larger the amount of ultrasonic energy the more effective the addition of energy becomes. Thinner metals have a poor performance. Ultrasonic energy enhances catalyzed whitening agents. The results of these studies suggest some thresholds for the configuration illustrated in Figures 1000a and 1000b: ultrasonic energy above 25 KHz, fork thicknesses greater than .010, and ultrasonic energy greater than that obtained with EDO's EC-70X1.70" transducers driven at greater than 50VDC.

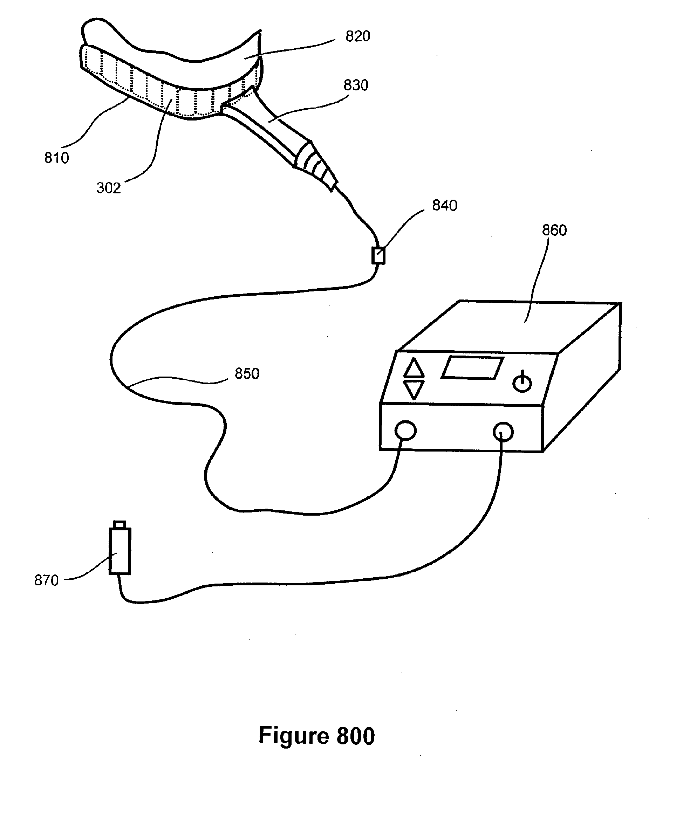

A device that is capable of delivering ultrasonic tooth whitening to the patient is illustrated in Figure 800. A disposable tray containing a fork system (820, described in detail in the discussion of Figures 1000a and 1000b), is filled with whitening gel/material and placed on the patient's teeth (302). The transducer(s) are mounted on the tang (as described earlier in the discussion of Figures 1000a and 1000b. The transducer(s), tang, and electrical connections are protected by a covering (830) made out of a material such as silicone. The transducer(s) are connected to the control module (860) by way of wires (850). The wires have an autoclavable connector (840) position such that the dentist may easily disconnect the fork assembly and place it in an autoclave. The control module (860) provides ultrasonic energy to the transducer(s). Ideally, the control module (860) constantly sweeps the frequency band searching and finding the resonance frequency of the transducer(s). The control module (860) would have an on-off/start switch, switches for changing, time, intensity, and/or implementing and running established programs. Furthermore, the control module (860) would have a screen, such as and LED or LCD display, that would allow the user to view setting and other information. The patient would also be provided with a switch (870) that when engaged would terminate the ultrasonic energy being applied to their teeth.

Our work has clearly demonstrated that while ultrasonic energy will not facilitate penetration of the chemical whitening product into the teeth. Our work demonstrates that if other chemical constituents and pathways are available for peroxides to react with, ultrasonic energy will assist in those reactions and when all of these factors are accurately designed or calculated and precisely applied, the introduction of ultrasonic energy will produce free radical oxygen atoms that can, then in turn, remove stains from teeth. For instance, in certain basic mediums (discussed at length above) ultrasonic energy will, refer to Figure 600, enhance the uptake of a proton from peroxides (610) by hydroxyl groups (620) and provide the energy requisite for the rapid degradation of the oxyhydronium anion (640) to the oxygen free radical (670) which in turn can be utilized to oxidize a molecule in a stain (refer to Figure 400).

Ultrasonic transducers produce the most amount of ultrasonic energy per applied energy when they are in a state of resonance. Put differently, ultrasonic transducers are most efficient when they are driven at a resonant frequency. The problem is that the exact resonant frequency of the transducer are first different for different transducers, second change when applied to a material (such as the stainless steel cups or forks discussed above), and third change as the load on the substance changes (i.e. the addition of whitening agent and the amount of whitening agent added). In the laboratory, with a frequency generator, one may continually adjust the applied frequency as the variable change. In a dentist's office and in the patient's mouth manually adjusting the frequency to achieve resonance would be untenable. Thus according to the invention, we have come up with a solution for this problem. When a transducer achieves resonance with the applied electricity, the transducer's current draw maximizes. By measuring the current while varying the frequency of the applied voltage resonance can be found when the current draw maximizes. By constructing a circuit that monitors the current and 'sweeps' the frequency to obtain resonance, maximum efficiency is realized. If the monitoring is ongoing the circuit adjusts as the variables change and maximum efficiency is obtained throughout the course of the whitening treatment.

We therefore conclude that tooth whitening may be accelerated and intensified by use of ultrasonic energy. Although ultrasonic energy does nothing to directly enhance whitening (i.e., it has no direct effect on stains, tooth enamel, or peroxides), ultrasonic energy may be utilized to accelerate and intensify chemical reactions between a peroxide and another dental bleach constituent, consequently accelerating and enhancing the release of oxygen ions from the peroxide, which in turn accelerates and enhances the whitening of teeth.

The devices and techniques described herein may be utilized to facilitate teeth whitening, teeth cleaning, oral tissue treatment, and oral disinfection. The general principles herein may be utilized in a variety of applications, including bleaching, whitening, disinfecting, or sterilizing any of a variety of media including cloth, clothing or fabric, household surfaces, industrial surfaces, medical care equipment and surfaces, and in any other application where the benefits of use of ultrasonic energy is desired.

It should be noted, aside from the novel material addressed above, that the approach to objective measurement of whitening agent potency by way of utilizing a standard dye is new to dentistry with no known prior art. Furthermore, the solution to obtaining resonance in an ultrasonic transducer discuss above is also unknown in dentistry.

It should also be noted that the dissertation above should not be used to limit the use of ultrasonic energy to whitening alone. The results of the studies also imply that ultrasonic energy could be used to fight plaque and even bad breath.

While various structures, compounds and methods have been described and illustrated in conjunction with a number of specific ingredients, materials and configurations herein, those skilled in the art will appreciate that variations and modifications may be made without departing from the principles herein illustrated, described, and claimed. The present invention, as defined by the appended claims, may be embodied in other specific forms without departing from its spirit or essential characteristics. The configurations of snacks described herein are to be considered in all respects as only illustrative, and not restrictive.

## Claims

1. An apparatus for whitening teeth comprising:
an ultrasonic dental tray (910),
said ultrasonic dental tray having at least one ultrasonic transducer (920) which produces ultrasonic waves when powered,
a quantity of tooth whitening composition placable in said ultrasonic dental tray,
said ultrasonic dental tray (910) being placable into a human mouth that has teeth located therein,
said ultrasonic transducer being powerable by a frequency generator to create ultrasonic waves to release oxygen ions from said tooth whitening composition to accelerate and intensify tooth bleaching, said oxygen ions being operable to remove stains from said teeth; and
a circuit (860) operable to monitor a current drawn by said ultrasonic transducer as said frequency generator adjusts its frequency and to determine a resonant frequency to be used by said frequency generator as being that frequency which maximises said current drawn.

2. The apparatus as recited in claim 1 wherein said tooth whitening composition includes a peroxide and a basic medium.

3. The apparatus as recited in claim 2 wherein said basic medium and said peroxide react to form an intermediate substance.

4. The apparatus as recited in claim 3 wherein said intermediate substance is an oxyhydronium ion.

5. The apparatus as recited in claim 3 wherein said ultrasonic waves release said intermediate substance at higher levels of hydroxide than would occur absent said ultrasonic waves.

6. The apparatus as recited in claim 4 wherein said ultrasonic waves release said oxyhydronium ion at higher levels of hydroxide than would occur absent said ultrasonic waves.

7. The apparatus as recited in one of claims 1, 5 or 6 wherein said ultrasonic waves release of oxygen ions at a faster rate than would occur absent said ultrasonic waves.

8. The apparatus as recited in claim 1 wherein said ultrasonic transducer operates at the level of at least 20 kHz.

9. The apparatus as recited in claim 1 wherein said ultrasonic transducer operates at the level of at least 30 kHz.

10. The apparatus as recited in claim 1 wherein said ultrasonic transducer operates at the level of at least 35 kHz.

11. The apparatus as recited in claim 1 wherein said ultrasonic transducer operates at the level of at least 40 kHz.

12. The apparatus as recited in claim 1 wherein said ultrasonic transducer operates at the level of not more than 50 kHz.

13. The apparatus as recited in claim 1 wherein said ultrasonic transducer is in a location on said tray that is in a human mouth when said tray is in use.

14. The apparatus as recited in claim 1 wherein said ultrasonic transducer is in a location on said tray that is not within a human mouth when said tray is in use.

## Patentansprüche

1. Vorrichtung zum Aufhellen von Zähnen, aufweisend:
eine Ultraschall-Dentalschiene (910),
wobei die Ultraschall-Dentalschiene zumindest einen Ultraschall-Wandler (920) aufweist, wobei der Ultraschall-Wandler dafür eingerichtet ist Ultraschallwellen zu erzeugen, wenn er mit Energie versorgt wird,
eine Menge einer Zahn-Aufhellungs-Zusammensetzung, die in der Ultraschall-Dentalschiene platzierbar ist,
wobei die Ultraschall-Dentalschiene (910) dafür eingerichtet ist, in einem menschlichen Mund mit darin befindlichen Zähnen platziert zu werden,
wobei der Ultraschall-Wandler dafür eingerichtet ist, von einem Frequenzgenerator mit Energie versorgt zu werden um Ultraschallwellen zu erzeugen, um dadurch Sauerstoff-Ionen aus der Zahn-Aufhellungs-Zusammensetzung freizusetzen um eine Zahn-Aufhellung zu beschleunigen und zu intensivieren, wobei die Sauerstoff-Ionen dafür geeignet sind Verfärbungen von den Zähnen zu entfernen; und
einen Schaltkreis (860),
wobei der Schaltkreis dafür eingerichtet ist, eine Stromaufnahme des Ultraschall-Wandlers zu überwachen, während der Frequenzgenerator seine Frequenz einstellt, und eine von dem Frequenzgenerator zu nutzende Resonanzfrequenz zu ermitteln, wobei die Resonanzfrequenz die Frequenz ist, bei der die Stromaufnahme maximal ist.

2. Vorrichtung gemäß Anspruch 1, wobei die Zahn-Aufhellungs-Zusammensetzung ein Peroxid und ein basisches Medium aufweist.

3. Vorrichtung gemäß Anspruch 2, wobei das basische Medium und das Peroxide miteinander reagieren, um ein Zwischenprodukt zu bilden.

4. Vorrichtung gemäß Anspruch 3, wobei das Zwischenprodukt ein Oxyhydroxid - Ion ist.

5. Vorrichtung gemäß Anspruch 3, wobei die Ultraschallwellen das Zwischenprodukt bei höheren Hydroxid-Mengen freisetzen, als ohne die Ultraschallwellen auftreten würden.

6. Vorrichtung gemäß Anspruch 4, wobei die Ultraschalwellen das Oxyhydroxid - Ion bei höheren Hydroxid-Mengen freisetzen, als ohne die Ultraschallwellen auftreten würden.

7. Vorrichtung gemäß einem der Ansprüche 1, 5 oder 6, wobei die Ultraschallwellen Sauerstoff-Ionen mit einer schnelleren Rate freisetzen, als ohne Ultraschallwellen auftreten würden.

8. Vorrichtung gemäß Anspruch 1, wobei der Ultraschall-Wandler bei einem Pegel von mindestens 20 kHz arbeitet.

9. Vorrichtung gemäß Anspruch 1, wobei der Ultraschall-Wandler bei einem Pegel von mindestens 30 kHz arbeitet.

10. Vorrichtung gemäß Anspruch 1, wobei der Ultraschall-Wandler bei einem Pegel von mindestens 35 kHz arbeitet.

11. Vorrichtung gemäß Anspruch 1, wobei der Ultraschall-Wandler bei einem Pegel von mindestens 40 kHz arbeitet.

12. Vorrichtung gemäß Anspruch 1, wobei der Ultraschall-Wandler bei einem Pegel von nicht mehr als 50 kHz arbeitet.

13. Vorrichtung gemäß Anspruch 1, wobei der Ultraschall-Wandler in einer Position auf der Ultraschall-Dentalschiene angeordnet ist, die sich in einem menschlichen Mund befindet, während die Ultraschall-Dentalschiene in Benutzung ist.

14. Vorrichtung gemäß Anspruch 1, wobei sich der Ultraschall-Wandler in einer Position auf der Ultraschall-Dentalschiene angeordnet ist, die sich nicht in einem menschlichen Mund befindet, während die Ultraschall-Dentalschiene in Benutzung ist.

## Revendications

1. Appareil pour le blanchiment des dents, comprenant :
un plateau dentaire ultrasonique (910),
ledit plateau dentaire ultrasonique ayant au moins un transducteur ultrasonique (920) qui produit des ondes ultrasoniques lorsqu'il est excité,
une quantité de composition de blanchiment des dents susceptible d'être placée dans ledit plateau dentaire ultrasonique,
ledit plateau dentaire ultrasonique (910) pouvant être placé dans une bouche humaine qui a des dents qui y sont situées,
ledit transducteur ultrasonique pouvant être excité par un générateur de fréquence pour créer des ondes ultrasoniques afin de libérer des ions oxygène de ladite composition de blanchiment de dents pour accélérer et intensifier le blanchiment des dents, lesdits ions oxygène étant à même d'éliminer les taches desdites dents ; et
un circuit (860) qui est à même de contrôler un courant aspiré par ledit transducteur ultrasonique lorsque ledit générateur de fréquence ajuste sa fréquence et de déterminer une fréquence de résonance à utiliser par ledit générateur de fréquence comme étant la fréquence qui maximise ledit courant aspiré.

2. Appareil selon la revendication 1, dans lequel ladite composition de blanchiment des dents comprend un peroxyde et un milieu basique.

3. Appareil selon la revendication 2, dans lequel ledit milieu basique et ledit peroxyde réagissent pour former une substance intermédiaire.

4. Appareil selon la revendication 3, dans lequel ladite substance intermédiaire est un ion oxyhydronium.

5. Appareil selon la revendication 3, dans lequel lesdites ondes ultrasoniques libèrent ladite substance intermédiaire à des niveaux d'hydroxyde supérieurs à ceux qui se produiraient en l'absence desdites ondes ultrasoniques.

6. Appareil selon la revendication 4, dans lequel lesdites ondes ultrasoniques libèrent ledit ion oxyhydronium à des niveaux d'hydroxyde supérieurs à ceux qui se produiraient en l'absence desdites ondes ultrasoniques.

7. Appareil selon l'une quelconque des revendications 1, 5 ou 6, dans lequel lesdites ondes ultrasoniques libèrent les ions oxygène à une vitesse plus rapide que cela ne se produirait en l'absence desdites ondes ultrasoniques.

8. Appareil selon la revendication 1, dans lequel ledit transducteur ultrasonique opère à un niveau d'au moins 20 kHz.

9. Appareil selon la revendication 1, dans lequel ledit transducteur ultrasonique opère à un niveau d'au moins 30 kHz.

10. Appareil selon la revendication 1, dans lequel ledit transducteur ultrasonique opère à un niveau d'au moins 35 kHz.

11. Appareil selon la revendication 1, dans lequel ledit transducteur ultrasonique opère à un niveau d'au moins 40 kHz.

12. Appareil selon la revendication 1, dans lequel ledit transducteur ultrasonique opère à un niveau de pas plus de 50 kHz.

13. Appareil selon la revendication 1, dans lequel ledit transducteur ultrasonique se trouve à un emplacement sur ledit plateau qui se trouve dans une bouche humaine lorsque ledit plateau est en service.

14. Appareil selon la revendication 1, dans lequel ledit transducteur ultrasonique se trouve à un emplacement sur ledit plateau qui ne se trouve pas dans une bouche humaine lorsque ledit plateau est en service.
